(19) **Europäisches Patentamt**
**European Patent Office**
**Office européen des brevets**

(11) **EP 4 513 821 A1**

(12) **EUROPEAN PATENT APPLICATION**
published in accordance with Art. 153(4) EPC

(43) Date of publication:
**26.02.2025 Bulletin 2025/09**

(21) Application number: **23795347.6**

(22) Date of filing: **24.04.2023**

(51) International Patent Classification (IPC):
***H04L 5/14*** *(2006.01)*

(52) Cooperative Patent Classification (CPC):
**H04B 15/00; H04L 5/14**

(86) International application number:
**PCT/CN2023/090346**

(87) International publication number:
**WO 2023/207914 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.04.2022  CN 202210468952**

(71) Applicant: **Huawei Technologies Co., Ltd.**
**Shenzhen, Guangdong 518129 (CN)**

(72) Inventors:
• **ZHANG, Jingjing**
  **Shenzhen, Guangdong 518129 (CN)**

• **LIU, Bin**
  **Shenzhen, Guangdong 518129 (CN)**
• **LI, Hantao**
  **Shenzhen, Guangdong 518129 (CN)**
• **DU, Gaoke**
  **Shenzhen, Guangdong 518129 (CN)**
• **YANG, Huilian**
  **Shenzhen, Guangdong 518129 (CN)**
• **LI, Jin**
  **Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **FULL-DUPLEX COMMUNICATION APPARATUS AND METHOD**

(57) A full-duplex communication apparatus and method are provided, and relate to the field of communication technologies, to improve a self-interference cancellation capability of the full-duplex communication apparatus. The full-duplex communication apparatus includes a first antenna, a second antenna, and a gating apparatus. The full-duplex communication apparatus may receive a first signal from the first antenna through the gating apparatus, and perform interference suppression or cancellation on the first signal; and may further transmit a signal through the second antenna.

FIG. 2

**Description**

This application claims priority to Chinese Patent Application No. 202210468952.0, filed with the China National Intellectual Property Administration on April 29, 2022 and entitled "FULL-DUPLEX COMMUNICATION APPARATUS AND METHOD", which is incorporated herein by reference in its entirety.

**TECHNICAL FIELD**

This application relates to the field of communication technologies, and in particular, to a full-duplex communication apparatus and method.

**BACKGROUND**

In a communication system, communication apparatuses may communicate with each other based on a full-duplex communication technology, to improve spectral efficiency and improve uplink and downlink scheduling flexibility. The communication apparatus using the full-duplex communication technology may include a transmit link and a receive link. The transmit link may convert a digital domain signal into an analog domain signal and transmit the analog domain signal, and the receive link may convert the received analog domain signal into the digital domain signal and process the digital domain signal.

For the communication apparatus using the full-duplex communication technology, some energy of a signal transmitted by the transmit link may be received by the receive link, causing strong interference to the received signal. Consequently, the receive link cannot correctly receive the signal. In other words, the transmit link causes strong self-interference to the receive link. To reduce the self-interference, self-interference cancellation may be performed by using a typical three-level cancellation architecture of antenna isolation, radio frequency cancellation, and digital cancellation.

For the antenna isolation, a transceiver antenna may implement suppression by using some special electromagnetic structures. The radio frequency cancellation is implemented in an analog domain. An amplitude and a delay are adjusted, to prevent a locally coupled transmit signal from interfering with and blocking a radio frequency receive link, so that a received signal can smoothly pass through an analog-to-digital converter. The digital cancellation is implemented in a digital domain, to compensate for residual self-interference and improve an overall interference suppression capability of the communication apparatus.

However, in an actual deployment process, isolation of the transceiver antenna is limited, and a radio frequency cancellation effect is greatly affected by an environment, and becomes complex as a quantity of antennas increases. Therefore, for the communication apparatus using the full-duplex communication technology, how to improve a self-interference cancellation capability becomes an urgent technical problem to be resolved.

**SUMMARY**

In view of this, embodiments of this application provide a full-duplex communication apparatus and method, to improve a self-interference cancellation capability of the full-duplex communication apparatus.

According to a first aspect, an embodiment of this application provides a full-duplex communication apparatus. The full-duplex communication apparatus includes a first antenna, a second antenna, and a gating apparatus. The full-duplex communication apparatus is configured to: receive a first signal from the first antenna through the gating apparatus, and perform interference suppression or cancellation on the first signal; and is further configured to transmit a signal through the second antenna.

Based on the first aspect, an independent first antenna may be arranged in the full-duplex communication apparatus based on the second antenna, to perform interference suppression or cancellation on the first signal received by the first antenna, and a signal may be further transmitted through the second antenna. Because the first antenna and the second antenna are two independent antenna units, an antenna spacing may be large. Therefore, antenna isolation is improved, a self-interference cancellation capability is improved, and interference that is caused by signal transmitting of the second antenna to signal receiving of the first antenna can be effectively reduced.

In a possible design, the full-duplex communication apparatus is further configured to: receive a second signal from the second antenna through the gating apparatus, and perform channel reciprocity measurement based on the second signal.

Based on the possible design, a feasible solution is provided for the full-duplex communication apparatus to perform channel reciprocity measurement.

In a possible design, the first signal is a radio frequency signal or a baseband signal; or the second signal is a radio frequency signal or a baseband signal.

Based on the possible design, the gating apparatus may be located between a radio frequency unit and an antenna, or may be located between a radio frequency unit and a baseband unit. Correspondingly, a signal received through the gating apparatus may be a radio frequency signal, or may be a baseband signal. This is not limited.

In a possible design, the first antenna and the second antenna are at different geographical locations.

Based on the possible design, the first antenna and the second antenna may be two independent antenna units. A larger spacing between the first antenna and the second antenna indicates higher antenna isolation and a stronger self-interference cancellation capability.

In a possible design, the full-duplex communication apparatus further includes a third antenna. The full-duplex communication apparatus receives a third signal from the third antenna, and performs interference suppression or cancellation on the first signal and the third signal.

Based on the possible design, the full-duplex communication apparatus may implement joint interference suppression through the first antenna and the third antenna, to enhance an interference suppression capability and improve the self-interference cancellation capability.

According to a second aspect, an embodiment of this application provides a full-duplex communication method. The method may be applied to a full-duplex communication apparatus. The method may include: receiving a first signal from a first antenna through a gating apparatus, and performing interference suppression or cancellation on the first signal; and further transmitting a signal through a second antenna. The second aspect is a method corresponding to the apparatus in the first aspect, and therefore, beneficial effects that can be achieved in the first aspect can also be achieved in the second aspect.

In a possible design, the method further includes: receiving a second signal from the second antenna through the gating apparatus, and performing channel reciprocity measurement based on the second signal.

In a possible design, the first signal is a radio frequency signal or a baseband signal; or the second signal is a radio frequency signal or a baseband signal.

In a possible design, a third signal from a third antenna is received, and interference suppression or cancellation is performed on the first signal and the third signal.

## BRIEF DESCRIPTION OF DRAWINGS

FIG. 1 is a diagram of a typical three-level cancellation architecture according to an embodiment of this application;
FIG. 2 is a diagram of a full-duplex communication apparatus according to an embodiment of this application;
FIG. 3 is a diagram of a full-duplex communication apparatus according to an embodiment of this application;
FIG. 4 is a diagram of a full-duplex communication apparatus according to an embodiment of this application;
FIG. 5 is a diagram of a transmitter and receiver integrated apparatus according to an embodiment of this application;
FIG. 6 is a diagram of a transceiver module according to an embodiment of this application;

FIG. 7 is a diagram of a full-duplex communication apparatus according to an embodiment of this application;
FIG. 8 is a diagram of a full-duplex communication apparatus according to an embodiment of this application;
FIG. 9 is a diagram of a full-duplex communication apparatus according to an embodiment of this application;
FIG. 10 is a diagram of a full-duplex communication apparatus according to an embodiment of this application;
FIG. 11 is a diagram of a full-duplex communication apparatus according to an embodiment of this application;
FIG. 12 is a diagram of a full-duplex communication apparatus according to an embodiment of this application;
FIG. 13 is a diagram of a full-duplex communication apparatus according to an embodiment of this application;
FIG. 14 is a diagram of a transmitting module according to an embodiment of this application;
FIG. 15 is a diagram of a full-duplex communication apparatus according to an embodiment of this application;
FIG. 16 is a diagram of a full-duplex communication apparatus according to an embodiment of this application;
FIG. 17 is a diagram of a full-duplex communication apparatus according to an embodiment of this application;
FIG. 18 is a diagram of a full-duplex communication apparatus according to an embodiment of this application;
FIG. 19 is a flowchart of a full-duplex communication method according to an embodiment of this application; and
FIG. 20 is a diagram of a full-duplex communication apparatus according to an embodiment of this application.

## DESCRIPTION OF EMBODIMENTS

Before embodiments of this application are described, technical terms used in embodiments of this application are described.

A full-duplex communication technology may include a co-time co-frequency full-duplex technology and a co-time adjacent-frequency full-duplex technology, can improve spectral efficiency, and can further improve uplink and downlink scheduling flexibility.

As mobile communication is increasingly widely applied, more diversified services are provided. For example, in a future factory, various types of machine vision, augmented reality, or virtual reality, or various types of industrial control may appear, and higher requirements are imposed on uplink and downlink service flexibility and spectral efficiency of mobile communication. In this background, an uplink capacity requirement is increasingly high, and continuous space domain multiflow enhancement and a full-duplex technology play an increasingly important role in a communication system.

A communication apparatus using a full-duplex communication technology may include a transmit link and a receive link.

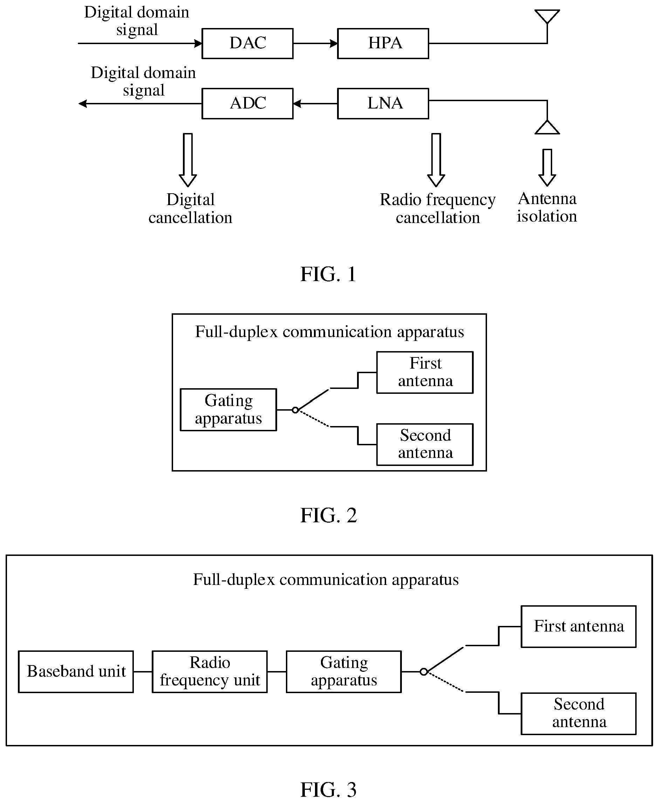

For example, as shown in FIG. 1, the transmit link may mean that a digital domain signal is converted into an analog domain signal through a digital-to-analog converter (digital-to-analog converter, DAC), then the analog domain signal enters a radio frequency link including a high power amplifier (high power amplifier, HPA), and finally, the analog domain signal is converted, through a transmit antenna, into an electromagnetic wave signal that is to be transmitted freely in space. The receive link may mean that an electromagnetic wave signal in space is converted into an electrical signal through a receive antenna, the electrical signal is amplified through a radio frequency link including a low noise amplifier (low noise amplifier, LNA), and finally, the electrical signal is converted into a digital domain signal through an analog-to-digital converter (analog-to-digital converter, ADC) for processing.

When the communication apparatus using the full-duplex communication technology performs communication, to reduce self-interference caused by the transmit link to the receive link, self-interference cancellation may be performed by using a typical three-level cancellation architecture of antenna isolation, radio frequency cancellation, and digital cancellation shown in FIG. 1.

However, in an actual deployment process, isolation of a transceiver antenna is limited, and a radio frequency cancellation effect is greatly affected by an environment, and becomes complex as a quantity of antennas increases. Therefore, for the communication apparatus using the full-duplex communication technology, how to improve a self-interference cancellation capability becomes an urgent technical problem to be resolved.

To resolve the foregoing problem, an embodiment of this application provides a full-duplex communication apparatus. The full-duplex communication apparatus may include a first antenna, a second antenna, and a gating apparatus. The full-duplex communication apparatus may receive a first signal from the first antenna through the gating apparatus, perform interference suppression or cancellation on the first signal, and further decode the first signal to obtain information sent by a terminal device. Alternatively, the full-duplex communication apparatus may receive a second signal from the second antenna through the gating apparatus, and perform channel reciprocity measurement based on the second signal. Alternatively, the full-duplex communication apparatus transmits a signal through the second antenna.

In this embodiment of this application, an independent first antenna may be arranged in the full-duplex communication apparatus based on the second antenna, to perform interference suppression or cancellation on the first signal received by the first antenna, and perform channel reciprocity measurement based on the second signal received by the second antenna, or transmit a signal based on the second antenna. Because the first antenna and the second antenna are two independent antenna units, an antenna spacing may be large. Therefore, antenna isolation is improved, a self-interference cancellation capability is improved, and interference that is caused by signal transmitting of the second antenna to signal receiving of the first antenna is effectively reduced.

The following describes implementations of embodiments of this application in detail with reference to the accompanying drawings in this specification.

An embodiment of this application provides a full-duplex communication apparatus. The full-duplex communication apparatus may be used in various communication systems, for example, may be used in any one of the following communication systems: a third generation partnership project (third generation partnership project, 3GPP) communication system, for example, a long term evolution (long term evolution, LTE) system, a fifth generation (fifth generation, 5G) mobile communication system, a new radio (new radio, NR) system, another next-generation communication system (for example, a 6G communication system, a communication system using a millimeter-wave band or even a higher carrier frequency), or a non-3GPP communication system. This is not limited.

The full-duplex communication apparatus provided in this embodiment of this application may support a co-time co-frequency full-duplex technology or a co-time adjacent-frequency full-duplex technology, so that uplink multiflow enhancement can be implemented at lower costs, spectral efficiency can be improved, and uplink and downlink scheduling flexibility can be improved.

Specifically, as shown in FIG. 2, the full-duplex communication apparatus may include a first antenna, a second antenna, and a gating apparatus.

The first antenna and the second antenna may be at different geographical locations, in other words, the first antenna and the second antenna may be two antenna units independent of each other.

Optionally, the full-duplex communication apparatus includes one or more first antennas.

As shown in FIG. 2, the full-duplex communication apparatus may be connected to the first antenna through the gating apparatus, receive a first signal from the first antenna, and perform interference suppression or cancellation on the first signal. The first signal received by the full-duplex communication apparatus through the gating apparatus may be a baseband signal, or may be a radio frequency signal. This is not limited.

As shown in FIG. 2, the full-duplex communication apparatus may further transmit a signal through the second antenna.

When the full-duplex communication apparatus transmits the signal through the second antenna, the full-duplex communication apparatus may receive the first signal through the first antenna. Because the first antenna and the second antenna are at different geographical locations, an antenna spacing may be large, and antenna isolation is high. Therefore, interference that is caused by signal transmitting of the second antenna to receiving of the first antenna can be effectively reduced, reliability of receiving the first signal can be improved, and a self-interference cancellation capability can be further improved.

As shown in FIG. 2, the full-duplex communication apparatus may also be connected to the second antenna through the gating apparatus, receive a second signal from the second antenna, and perform channel reciprocity measurement based on the second signal. The second signal received by the full-duplex communication apparatus through the gating apparatus may be a baseband signal, or may be a radio frequency signal. This is not limited.

A time division duplex (time division duplex, TDD) communication system may transmit signals in an uplink and a downlink link by using a same frequency and different slots. When an uplink and downlink sending time interval is short enough, it may be considered that fading of an uplink channel is basically the same as that of a downlink channel, in other words, it is considered that the uplink channel and the downlink channel have reciprocity. The full-duplex communication apparatus may estimate, by detecting an uplink received signal, channel fading to be experienced by a downlink transmitted signal, to determine a downlink transmission solution and a parameter.

To be specific, the full-duplex communication apparatus may perform channel estimation based on the received second signal, obtain downlink channel state information based on a channel estimation result and based on channel reciprocity, and design a downlink precoding matrix based on the downlink channel state information.

Optionally, the full-duplex communication apparatus may periodically perform channel reciprocity measurement. To be specific, the full-duplex communication apparatus may be periodically connected to the second antenna through the gating apparatus, and further perform channel reciprocity measurement based on the second signal received by the second antenna.

It should be noted that, when transmitting the signal through the second antenna, the full-duplex communication apparatus does not perform channel reciprocity measurement, to avoid interference that is caused by the signal transmitting by the second antenna to the channel reciprocity measurement.

Optionally, the full-duplex communication apparatus further includes a baseband unit and a radio frequency unit.

When the full-duplex communication apparatus transmits a signal, the full-duplex communication apparatus may convert a digital domain signal into an analog domain signal through the baseband unit and the radio frequency unit, and then transmit the analog domain signal through an antenna. When the full-duplex communication apparatus receives a signal, the full-duplex communication apparatus may convert, through the radio frequency unit and the baseband unit, the signal received by the antenna from an analog domain signal to a digital domain signal, and then process the digital domain signal.

Optionally, the baseband unit may be a building baseband unit (building baseband unit, BBU), and the radio frequency unit may be a remote radio unit (remote radio unit, RRU).

Based on the foregoing descriptions of the baseband unit and the radio frequency unit, the gating apparatus may be located between the radio frequency unit and an antenna, or may be located between the baseband unit and the radio frequency unit.

When the gating apparatus is located between the radio frequency unit and the antenna, as shown in FIG. 3, the transmit link and the receive link of the full-duplex communication apparatus may share the baseband unit and the radio frequency unit. The radio frequency unit may be connected to the first antenna through the gating apparatus to receive the first signal, or may be connected to the second antenna through the gating apparatus to receive the second signal, or may be connected to the second antenna through the gating apparatus to transmit the signal.

When the full-duplex communication apparatus receives the first signal through the first antenna, based on a signal receiving direction, the receive link may sequentially include the first antenna, the gating apparatus, the radio frequency unit, and the baseband unit. When the full-duplex communication apparatus receives the second signal through the second antenna, based on a signal receiving direction, the receive link may sequentially include the second antenna, the gating apparatus, the radio frequency unit, and the baseband unit. When the full-duplex communication apparatus transmits the signal through the second antenna, based on a signal transmitting direction, the transmit link may sequentially include the baseband unit, the radio frequency unit, the gating apparatus, and the second antenna.

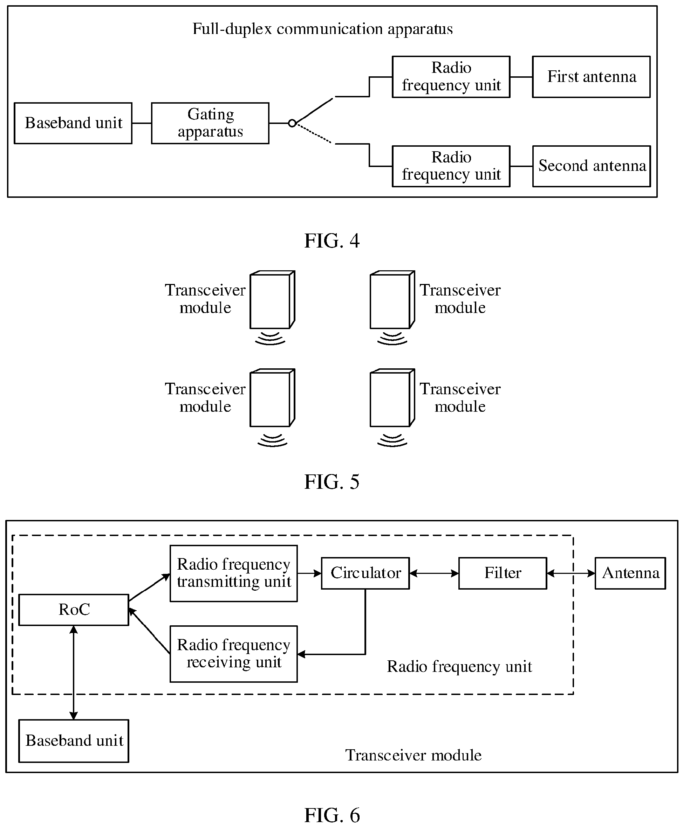

When the gating apparatus is located between the baseband unit and the radio frequency unit, as shown in FIG. 4, the transmit link and the receive link of the full-duplex communication apparatus may share the baseband unit. The baseband unit may be connected, through the gating apparatus, to a radio frequency unit connected to the first antenna, to receive the first signal through the first antenna. The baseband unit may also be connected, through the gating apparatus, to a radio frequency unit connected to the second antenna, to receive the second signal through the second antenna, or transmit the signal through the second antenna.

When the full-duplex communication apparatus receives the first signal through the first antenna, based on a signal receiving direction, the receive link may sequentially include the first antenna, the radio frequency unit connected to the first antenna, the gating apparatus, and the baseband unit. When the full-duplex communication apparatus receives the second signal through the second antenna, based on a signal receiving direction, the receive link may sequentially include the second antenna, the radio frequency unit connected to the second antenna, the gating apparatus, and the baseband unit. When the full-duplex communication apparatus transmits the signal through the second antenna, based on a signal transmitting direction, the transmit link may sequentially include the baseband unit, the gating apparatus, the radio frequency unit connected to the second antenna, and the second antenna.

Optionally, when the gating apparatus is located between the radio frequency unit and the antenna, the gating apparatus may be a radio frequency switch. When the gating apparatus is located between the baseband unit and the radio frequency unit, the gating apparatus may be a baseband switch. Alternatively, the gating apparatus may be a diode or another apparatus that can implement gating. This is not limited.

It should be noted that the full-duplex communication apparatus may be connected to one antenna through the gating apparatus at a same moment. For example, the full-duplex communication apparatus is connected to the first antenna through the gating apparatus at a first moment, and is connected to the second antenna through the gating apparatus at a second moment. Alternatively, the full-duplex communication apparatus may be simultaneously connected to the first antenna and the second antenna through the gating apparatus at a same moment. This is not limited.

In a first possible design, a first antenna and a gating apparatus may be added to the full-duplex communication apparatus based on a transmitting apparatus.

The transmitting apparatus may be an apparatus that can transmit a signal but cannot receive a signal. The transmitting apparatus may include a baseband unit, a radio frequency unit, and a second antenna. The transmitting apparatus may transmit a signal through the second antenna.

For example, the transmitting apparatus may be a transmitter or a small cell. This is not limited.

For descriptions of the first antenna and the gating apparatus, refer to the descriptions of the first antenna and the gating apparatus in FIG. 2 to FIG. 4. Details are not described again.

It should be noted that, in the first possible design, the full-duplex communication apparatus may be connected to the first antenna through the gating apparatus to receive a signal, and connected to the second antenna through the gating apparatus to transmit a signal.

In a second possible design, for the full-duplex communication apparatus, a receive antenna in a transmitter and receiver integrated apparatus may be remotely deployed based on the transmitter and receiver integrated apparatus.

The transmitter and receiver integrated apparatus may be any device having a wireless transceiver function. The transmitter and receiver integrated apparatus may include a transmit link and a receive link. A receive antenna on the receive link may be remotely deployed to improve antenna isolation between a transmit antenna and the receive antenna. Therefore, interference that is caused by transmitting of the transmit antenna to receiving of the receive antenna is effectively reduced, and a self-interference cancellation capability is improved.

For example, the transmitter and receiver integrated apparatus may be a device supporting wired access, or may be a device supporting wireless access. For example, the transmitter and receiver integrated apparatus may be an access network (access network, AN)/radio access network (radio access network, RAN) device, and includes a plurality of AN/RAN nodes. The AN/RAN node may be: an access point (access point, AP), an enhanced NodeB (enhanced NodeB, eNB), a next-generation NodeB (NR NodeB, gNB), a transmission reception point (transmission reception point, TRP), a transmission point (transmission point, TP), or another access node. This is not limited.

The transmit antenna is the second antenna, and the receive antenna is the first antenna. The full-duplex communication apparatus may be connected to the second antenna through the gating apparatus to transmit a signal, and connected to the first antenna through the gating apparatus to receive a signal.

For example, an example in which the transmitter and receiver integrated apparatus is a base station is used. As shown in FIG. 5, it is assumed that four transceiver modules are deployed in the base station in a distributed manner. As shown in FIG. 6, each transceiver module may include a baseband unit, a radio frequency unit, and an antenna. The baseband unit may include a system-on-a-chip (system-on-a-chip, SoC), configured to complete baseband digital domain signal processing. The radio frequency unit may include a radio-on-a-chip (radio-on-a-chip, RoC), configured to be responsible for radio frequency analog domain signal processing. Communication and transmission may be performed between the SoC and the RoC based on the JESD204B protocol. The radio frequency unit may further include a radio frequency transmitting unit, a radio frequency receiving unit, a circulator, and a filter. The radio frequency transmitting unit may transmit a radio frequency signal, and the radio frequency receiving unit may receive a radio frequency signal. The circulator may implement separation of signal transmitting and receiving. The filter may filter out specific out-of-passband interference. The antenna may transmit a signal or receive a signal.

When the base station transmits a signal through the antenna, a service signal of a digital baseband may be transmitted through a common public radio interface (common public radio interface, CPRI) optical fiber, digital-to-analog conversion and radio frequency up-conversion may be completed on the service signal through the SoC and the RoC, and then the service signal may pass through the radio frequency transmitting unit, the circulator, the filter, and the antenna, and may be transmitted through a transmit link. When the base station receives a signal through the antenna, the signal received by the antenna may pass through the filter, the circulator, and the radio frequency receiving unit, and arrive at the RoC, then the signal may be converted into a baseband digital signal through radio frequency down-conversion and arrive at the SoC, and the signal may be received and processed through a receive link.

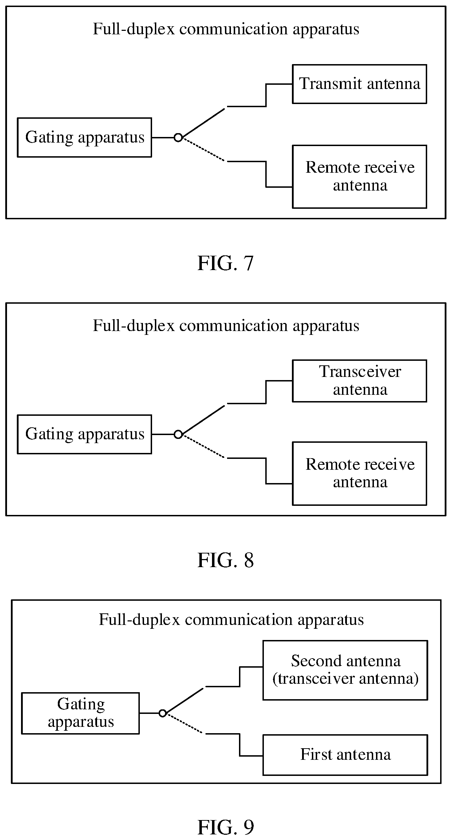

Based on the transceiver module shown in FIG. 6, antennas may be classified into a transmit antenna and a receive antenna. As shown in FIG. 7, the receive antenna may be remotely deployed to form a remote receive antenna, and a gating apparatus is added to implement switching between the transmit antenna and the remote receive antenna, to form the full-duplex communication apparatus provided in embodiments of this application. The transmit antenna is the second antenna, and the remote receive antenna is the first antenna. In this case, the full-duplex communication apparatus may be connected to the first antenna through the gating apparatus to receive the first signal, to implement interference suppression or cancellation; or may be connected to the second antenna through the gating apparatus to transmit a signal, to implement signal transmitting. For descriptions of the first antenna, the second antenna, and the gating apparatus, refer to related descriptions in FIG. 2 to FIG. 4. Details are not described again.

Based on the transceiver module shown in FIG. 6, antennas may alternatively be classified into a transceiver antenna and a receive antenna. As shown in FIG. 8, the receive antenna may be remotely deployed to form a remote receive antenna, and a gating apparatus is added to implement switching between the transceiver antenna and the remote receive antenna, to form the full-duplex communication apparatus provided in embodiments of this application. The transceiver antenna is the second antenna, and the remote receive antenna is the first antenna. In this case, the full-duplex communication apparatus may be connected to the first antenna through the gating apparatus to receive the first signal, to implement interference suppression or cancellation; may be connected to the second antenna through the gating apparatus to receive the second signal, to implement channel reciprocity measurement; or may be connected to the second antenna through the gating apparatus to transmit a signal, to implement signal transmitting. For descriptions of the first antenna, the second antenna, and the gating apparatus, refer to related descriptions in FIG. 2 to FIG. 4. Details are not described again.

Optionally, the full-duplex communication apparatus may transmit a signal through the second antenna, and receive a signal through the first antenna. When channel reciprocity measurement needs to be performed, the full-duplex communication apparatus may receive a signal through the second antenna, and perform channel reciprocity measurement based on the signal received by the second antenna.

In a third possible design, a first antenna and a gating apparatus may be added to the full-duplex communication apparatus based on a transmitter and receiver integrated apparatus.

Based on the descriptions of the transmitter and receiver integrated apparatus in the foregoing first possible design, the transmitter and receiver integrated apparatus may include a transceiver antenna. The first antenna may be added to improve antenna isolation between the first antenna and the transceiver antenna of the transmitter and receiver integrated apparatus. Therefore, interference that is caused by the transceiver antenna of the transmitter and receiver integrated apparatus to receiving of the first antenna is effectively reduced, and a self-interference cancellation capability is improved.

The transceiver antenna of the transmitter and receiver integrated apparatus is the second antenna. The full-duplex communication apparatus may be connected to the second antenna through the gating apparatus to transmit or receive a signal, or may be connected to the first antenna through the gating apparatus to receive a signal.

For example, as shown in FIG. 9, the full-duplex communication apparatus may be connected to the first antenna through the gating apparatus, or connected to the second antenna through the gating apparatus. In other words, the full-duplex communication apparatus is connected to one antenna through the gating apparatus at a same moment. When the full-duplex communication apparatus is connected to the first antenna through the gating apparatus, the full-duplex communication apparatus may receive a first signal through the first antenna, to implement interference suppression or cancellation. When the full-duplex communication apparatus is connected to the second antenna through the gating apparatus, the full-duplex communication apparatus may receive the second signal through the second antenna, to implement channel reciprocity measurement; or may transmit a signal through the second antenna, to implement signal transmitting.

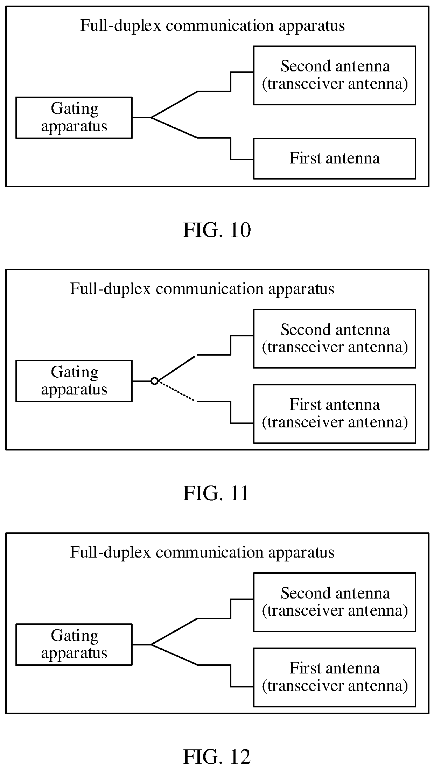

In another example, as shown in FIG. 10, the full-duplex communication apparatus may alternatively be simultaneously connected to the first antenna and the second antenna through the gating apparatus. In other words, the full-duplex communication apparatus may simultaneously have two receive links. The full-duplex communication apparatus may receive the first signal through the first antenna, to implement interference suppression or cancellation; may receive the second signal through the second antenna, to implement channel reciprocity measurement; or may transmit a signal through the second antenna, to implement signal transmitting.

Optionally, the full-duplex communication apparatus may transmit a signal through the second antenna, and receive a signal through the first antenna. When channel reciprocity measurement needs to be performed, the full-duplex communication apparatus may receive a signal through the second antenna, and perform channel reciprocity measurement based on the signal received by the second antenna.

Based on the foregoing three possible designs, optionally, the full-duplex communication apparatus may alternatively transmit a signal through the first antenna.

For example, as shown in FIG. 11, the full-duplex communication apparatus may be connected to the first antenna through the gating apparatus, or connected to the second antenna through the gating apparatus. In other words, the full-duplex communication apparatus is connected to one antenna through the gating apparatus at a same moment. When the full-duplex communication apparatus is connected to the first antenna through the gating apparatus, the full-duplex communication apparatus may receive the first signal through the first antenna, to implement interference suppression or cancellation; or may transmit a signal through the first antenna, to implement signal transmitting. When the full-duplex communication apparatus is connected to the second antenna through the gating apparatus, the full-duplex communication apparatus may receive the second signal through the second antenna, to implement channel reciprocity measurement; or may transmit a signal through the second antenna, to implement signal transmitting.

In another example, as shown in FIG. 12, the full-duplex communication apparatus may alternatively be simultaneously connected to the first antenna and the second antenna through the gating apparatus. In other words, the full-duplex communication apparatus may simultaneously have two receive links and two transmit links. The full-duplex communication apparatus may receive the first signal through the first antenna, to implement interference suppression or cancellation; may transmit a signal through the first antenna, to implement signal transmitting; may receive a second signal through the second antenna, to implement channel reciprocity measurement; or may transmit a signal through the second antenna, to implement signal transmitting.

It should be noted that, when both the first antenna and the second antenna are transceiver antennas, the full-duplex communication apparatus may transmit a signal through the second antenna, and receive a signal through the first antenna within same time, to reduce interference that is caused by the second antenna to receiving of the first antenna, and improve a self-interference cancellation capability.

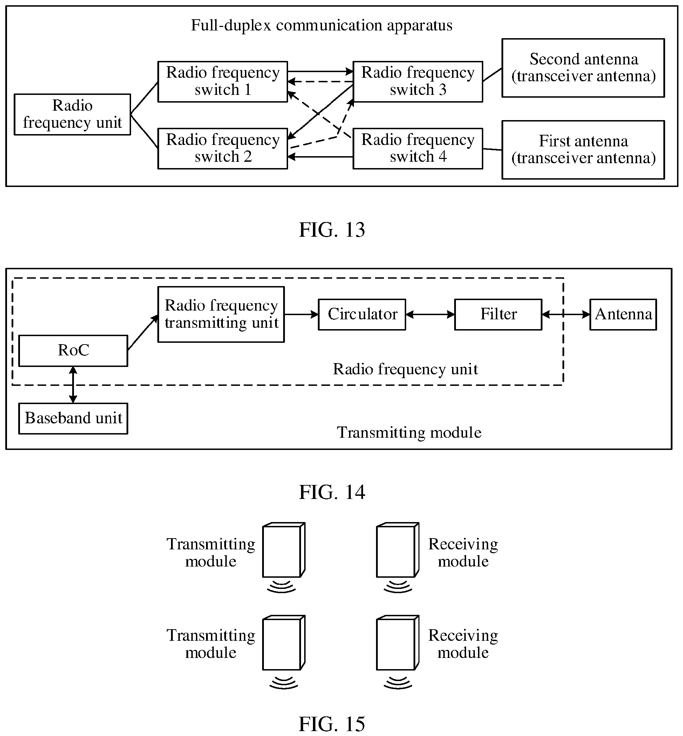

For example, as shown in FIG. 13, an example in which the gating apparatus is located between the radio frequency unit and the antenna is used. It is assumed that the gating apparatus includes four radio frequency switches: a radio frequency switch 1, a radio frequency switch 2, a radio frequency switch 3, and a radio frequency switch 4. The full-duplex communication apparatus may be connected to the second antenna by using the radio frequency switch 1 and the radio frequency switch 3 to transmit a signal, and receive a signal from the first antenna by using the radio frequency switch 4 and the radio frequency switch 2; or optionally, may receive a signal from the second antenna by using the radio frequency switch 3 and the radio frequency switch 2. Alternatively, the full-duplex communication apparatus may be connected to the first antenna by using the radio frequency switch 1 and the radio frequency switch 4 to transmit a signal, and receive a signal from the second antenna by using the radio frequency switch 3 and the radio frequency switch 2; or optionally, may receive a signal from the first antenna by using the radio frequency switch 4 and the radio frequency switch 2.

Optionally, based on the foregoing descriptions of the first antenna and the second antenna, in a communication system with a low downlink capacity requirement, when the full-duplex communication apparatus includes a transmitter and receiver integrated apparatus, a transceiver module in the transmitter and receiver integrated apparatus may be simplified as a transmitting module, to reduce costs. For example, after the transceiver module is simplified as the transmitting module, the costs can be reduced by 30%.

In this case, downlink precoding may be designed based on a codebook. To be specific, the full-duplex communication apparatus may send a channel state information reference signal to a terminal device, and after performing channel measurement based on the channel state information reference signal, the terminal device may feed back a channel measurement result to the full-duplex communication apparatus in a form of a codebook, to reduce communication overheads caused by channel state information feedback.

For example, as shown in FIG. 14, a transceiver module may be simplified as a transmitting module by removing a radio frequency receiving unit based on the transceiver module shown in FIG. 6. Based on the transmitter and receiver integrated apparatus including the transmitting module, as shown in FIG. 15, the full-duplex communication apparatus may include a transmitting module and a receiving module in which transmitting and receiving are separated.

Optionally, based on the foregoing descriptions of the full-duplex communication apparatus, the full-duplex communication apparatus may further include a third antenna.

The full-duplex communication apparatus may receive a third signal from the third antenna, and perform interference suppression or cancellation on the first signal and the third signal.

Optionally, the full-duplex communication apparatus includes one or more third antennas.

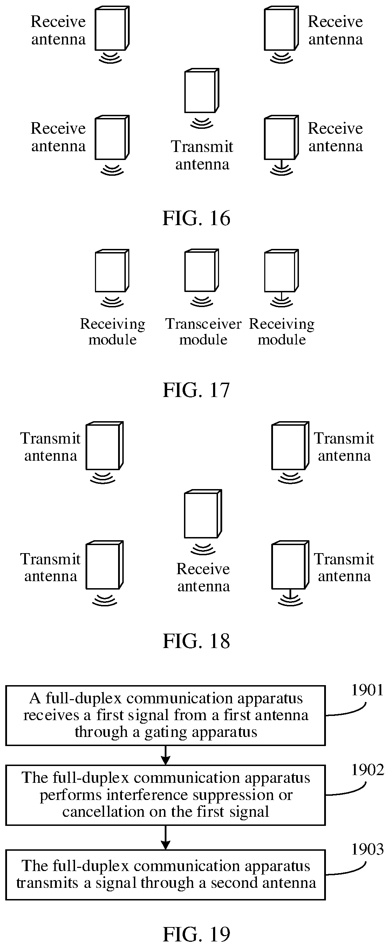

In a communication system with a high uplink capacity requirement, as shown in FIG. 16, on the basis of receiving a signal through the first antenna, the full-duplex communication apparatus may further receive a signal through one or more third antennas, to form a networking architecture of a transmit antenna and a plurality of remote receive antennas, so as to improve an uplink capacity of the communication system.

For example, when the full-duplex communication apparatus includes a transmitter and receiver integrated apparatus, as shown in FIG. 17, some of transceiver modules in the transmitter and receiver integrated apparatus may be simplified as receiving modules, and an antenna in the receiving module is a third antenna. Because the transceiver module is simplified as the receiving module, interference that is caused by the transmit antenna to the receive antenna can be reduced, and a self-interference suppression cancellation capability can be improved. In addition, costs can be reduced while the uplink capacity of the communication system is increased. For example, after the transceiver module is simplified as the receiving module, the costs can be reduced by 30%.

Similarly, as shown in FIG. 18, on the basis of transmitting a signal through the second antenna, the full-duplex communication apparatus may further transmit a signal through one or more fourth antennas, to form a networking architecture of a remote receive antenna and a plurality of transmit antennas, so as to improve a downlink capacity of the communication system.

Based on the foregoing descriptions of the full-duplex communication apparatus, an embodiment of this application further provides a full-duplex communication method. As shown in FIG. 19, the method may include the following steps.

Step 1901: A full-duplex communication apparatus receives a first signal from a first antenna through a gating apparatus.

Step 1902: The full-duplex communication apparatus performs interference suppression or cancellation on the first signal.

Step 1903: The full-duplex communication apparatus transmits a signal through the second antenna.

An independent first antenna may be arranged in the full-duplex communication apparatus based on the second antenna, to perform interference suppression or cancellation on the first signal received by the first antenna, and a signal may be further transmitted through the second antenna. Because the first antenna and the second antenna are two independent antenna units, an antenna spacing may be large. Therefore, antenna isolation is improved, a self-interference cancellation capability is improved, and interference that is caused by signal transmitting of the second antenna to signal receiving of the first antenna is effectively reduced.

For example, an example in which a spacing between the second antenna and the first antenna is 12 meters is used. For a 3.5 GHz frequency band, interference strength may be reduced by approximately 65 dB. For a millimeter-wave frequency band, interference strength may be reduced more.

It should be noted that an execution sequence of the foregoing step 1901 and step 1902 and step 1903 is not limited. The foregoing step 1901 and step 1902 and step 1903 may be simultaneously performed. Alternatively, step 1901 and step 1902 may be performed first, and then step 1903 is performed. Alternatively, step 1903 is performed first, and then step 1901 and step 1902 are performed. This is not limited.

Optionally, the full-duplex communication apparatus may further receive a second signal from the second antenna through the gating apparatus, and perform channel reciprocity measurement based on the second signal.

Optionally, if the full-duplex communication apparatus includes a third antenna, when performing interference suppression and cancellation, the full-duplex communication apparatus may perform distributed joint interference suppression based on the first signal received by the first antenna and the third signal received by the third antenna, to enhance an interference suppression capability and improve a self-interference cancellation capability. For example, for a 3.5 GHz frequency band, self-interference strength may be reduced by approximately 20 dB.

Joint interference suppression performed on the first signal and the third signal may be performed in an analog domain, or may be performed in a digital domain. This is not limited.

In this embodiment of this application, an analog beamforming technology or a digital beamforming technology may be used, to perform precise beam design with reference to multi-receive-end joint interference suppression, so that cross-link interference may exist in null-steering of a transmit signal beam or a receive signal beam, and an interference suppression capability is improved. Conventional radio frequency cancellation is replaced by beamforming, and this can bring higher implementability and a higher cost performance ratio in a future scenario in which there are more antenna array subunits and millimeter-wave communication is commercially used.

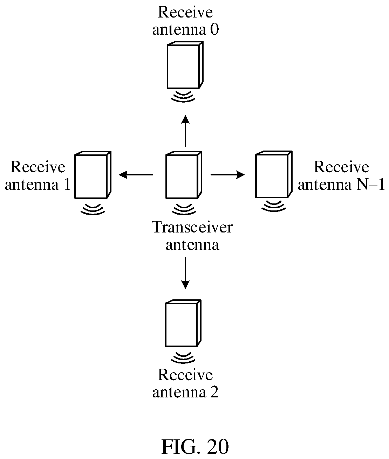

For example, as shown in FIG. 20, an example in which the first antenna and the third antenna of the full-duplex communication apparatus include N antennas is used, and the first signal and the third signal received by the full-duplex communication apparatus may include $R_0$, $R_1$, ..., and $R_{N-1}$. Assuming that a transmit signal vector is s, a user channel matrix is $H_s$, an interference vector is I, an interference matrix is $H_I$, and a noise vector is n, a receive signal vector R model may be usually expressed as follows:

$$R = H_s s + H_I I + n;$$

interference subspace $R_{II}$ about the interference matrix $H_I$ can be obtained through interference estimation:

$$R_{II} = H_I H_I^H; \text{ and}$$

accurate target user subspace $R_{hh}$ may be obtained by using a target sounding signal:

$$R_{hh} = H_s H_s^H.$$

Based on the foregoing descriptions, the following weight filter matrix may be designed, to separate the interference subspace from the target user subspace, so as to implement interference suppression:

$$R' = WR,$$

where
R' may represent a target signal without interference, or may represent a target signal with less interference; W may represent a weight vector of a multi-receive antenna; and R may represent a received signal.

Optionally, more receive antennas may be added, to obtain a larger degree of freedom of space. When a quantity of receive antennas is greater than a quantity of transmit antennas, interference caused by the transmit antenna can be better suppressed.

It should be noted that although analog or digital cancellation is not described in embodiments of this application, the solutions provided in embodiments of this application do not conflict with analog and digital cancellation technologies, and any full-duplex communication system that uses the full-duplex communication apparatus provided in embodiments of this application falls within the protection scope, even if the full-duplex communication system may further include another technology.

In addition, in the specification, the claims, and the accompanying drawings of this application, the terms "first", "second", and the like are intended to distinguish between different objects but do not necessarily indicate a specific order or limit a quantity. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, a plurality of layers may be two or more layers, a plurality of types may be two types or more types, and a plurality of layers may be two or more. One layer or more layers may be described as at least one layer, one type or more types may be described as at least one type, and one or more may be described as at least one. At least two layers (pieces) refer to two layers (pieces) or three layers (pieces) and more layers (pieces). "And/or" is used to describe an association relationship between associated objects, and indicates that three relationships may exist. For example, "A and/or B" may indicate: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, "a and b", "a and c", "b and c", or "a, b, and c", where a, b, and c may be singular or plural.

Based on the foregoing descriptions of the implementations, a person skilled in the art may clearly understand that for the purpose of convenient and brief descriptions, division into the functional modules is merely used as an example for description. In an actual application, the functions can be allocated to different functional modules for implementation based on a requirement. In other words, an inner structure of an apparatus is divided into different functional modules, to implement all or some of the foregoing described functions.

In the several embodiments provided in this application, it should be understood that the disclosed apparatus and method may be implemented in other manners. For example, the described apparatus embodiment is merely an example. For example, division into the modules or units is merely logical function division, and may be other division in an actual implementation. For example, a plurality of units or components may be combined or integrated into another apparatus, or some features may be ignored or not performed. In addition, the displayed or discussed mutual couplings or direct couplings or connections may be implemented through some interfaces. The indirect couplings or connections between the apparatuses or units may be implemented in electronic, mechanical, or other forms.

The units described as separate parts may or may not be physically separate, and parts displayed as units may be one physical unit or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, or an optical disc.

## Claims

1. A full-duplex communication apparatus, comprising a first antenna, a second antenna, and a gating apparatus, wherein

   the full-duplex communication apparatus is configured to: receive a first signal from the first antenna through the gating apparatus, and perform interference suppression or cancellation on the first signal; and
   the full-duplex communication apparatus is further configured to transmit a signal through the second antenna.

2. The apparatus according to claim 1, wherein the full-duplex communication apparatus is further configured to: receive a second signal from the second antenna through the gating apparatus, and perform channel reciprocity measurement based on the second signal.

3. The apparatus according to claim 1 or 2, wherein

   the first signal is a radio frequency signal or a baseband signal; or
   the second signal is a radio frequency signal or a baseband signal.

4. The apparatus according to any one of claims 1 to 3, wherein
   the first antenna and the second antenna are at different geographical locations.

5. The apparatus according to any one of claims 1 to 4, wherein the full-duplex communication apparatus further comprises a third antenna; and
   the full-duplex communication apparatus receives a third signal from the third antenna, and performs interference suppression or cancellation on the first signal and the third signal.

6. A full-duplex communication method, comprising:

   receiving a first signal from a first antenna through a gating apparatus, and performing interference suppression or cancellation on the first signal; and
   transmitting a signal through a second antenna.

7. The method according to claim 6, wherein the method further comprises:
   receiving a second signal from the second antenna through the gating apparatus, and performing channel reciprocity measurement based on the second signal.

8. The method according to claim 6 or 7, wherein

   the first signal is a radio frequency signal or a baseband signal; or
   the second signal is a radio frequency signal or a baseband signal.

9. The method according to any one of claims 6 to 8, wherein the performing interference suppression or cancellation on the first signal comprises:

   receiving a third signal from a third antenna; and
   performing interference suppression or cancellation on the first signal and the third signal.

Digital domain signal → DAC → HPA → (antenna)

Digital domain signal ← ADC ← LNA ← (antenna)

↓ Digital cancellation

↓ Radio frequency cancellation

↓ Antenna isolation

FIG. 1

Full-duplex communication apparatus

Gating apparatus — First antenna / Second antenna

FIG. 2

Full-duplex communication apparatus

Baseband unit — Radio frequency unit — Gating apparatus — First antenna / Second antenna

FIG. 3

Full-duplex communication apparatus

Gating apparatus

Transmit antenna

Remote receive antenna

FIG. 7

Full-duplex communication apparatus

Gating apparatus

Transceiver antenna

Remote receive antenna

FIG. 8

Full-duplex communication apparatus

Gating apparatus

Second antenna (transceiver antenna)

First antenna

FIG. 9

Full-duplex communication apparatus

Gating apparatus

Second antenna (transceiver antenna)

First antenna

FIG. 10

Full-duplex communication apparatus

Gating apparatus

Second antenna (transceiver antenna)

First antenna (transceiver antenna)

FIG. 11

Full-duplex communication apparatus

Gating apparatus

Second antenna (transceiver antenna)

First antenna (transceiver antenna)

FIG. 12

Full-duplex communication apparatus

Radio frequency unit → Radio frequency switch 1

Radio frequency switch 1 ⇄ Radio frequency switch 3

Radio frequency switch 3 → Second antenna (transceiver antenna)

Radio frequency unit → Radio frequency switch 2

Radio frequency switch 4 → Radio frequency switch 2

Radio frequency switch 4 → First antenna (transceiver antenna)

FIG. 13

Transmitting module

Radio frequency unit

RoC → Radio frequency transmitting unit → Circulator ⇄ Filter ⇄ Antenna

RoC ⇄ Baseband unit

FIG. 14

Transmitting module

Receiving module

Transmitting module

Receiving module

FIG. 15

Receive antenna

Receive antenna

Transmit antenna

Receive antenna

Receive antenna

FIG. 16

Receiving module

Transceiver module

Receiving module

FIG. 17

Transmit antenna

Transmit antenna

Receive antenna

Transmit antenna

Transmit antenna

FIG. 18

A full-duplex communication apparatus receives a first signal from a first antenna through a gating apparatus ⟶ 1901

The full-duplex communication apparatus performs interference suppression or cancellation on the first signal ⟶ 1902

The full-duplex communication apparatus transmits a signal through a second antenna ⟶ 1903

FIG. 19

Receive
antenna 0

Receive
antenna 1

Transceiver
antenna

Receive
antenna N–1

Receive
antenna 2

FIG. 20

## INTERNATIONAL SEARCH REPORT

| International application No. |
|---|
| **PCT/CN2023/090346** |

### A. CLASSIFICATION OF SUBJECT MATTER

H04L 5/14(2006.01)i

According to International Patent Classification (IPC) or to both national classification and IPC

### B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNABS; CNTXT; CNKI; VEN; ENTXT; ENTXTC; 3GPP; IEEE: 天线, 全双工, 选通, 切换, 环形器, 多, 两个, 第二, 独立, 对消, 抑制, 消除, 干扰, antenna, full duplex, gated, gating, strobe, switch, circulator, multi, two, second, independent, cancellation, suppression, interference

### C. DOCUMENTS CONSIDERED TO BE RELEVANT

| Category* | Citation of document, with indication, where appropriate, of the relevant passages | Relevant to claim No. |
|---|---|---|
| X | CN 109792374 A (SONY MOBILE COMMUNICATIONS INC.) 21 May 2019 (2019-05-21) description, paragraphs [0039]-[0069] | 1-9 |
| A | US 2017111164 A1 (TELEFONAKTIEBOLAGET LM ERICSSON (PUBL)) 20 April 2017 (2017-04-20) entire document | 1-9 |
| A | CN 105991170 A (CHINA ACADEMY OF TELECOMMUNICATIONS TECHNOLOGY) 05 October 2016 (2016-10-05) entire document | 1-9 |
| A | CN 106559100 A (SHANGHAI INSTITUTE OF MICROSYSTEM AND INFORMATION TECHNOLOGY, CHINESE ACADEMY OF SCIENCES) 05 April 2017 (2017-04-05) entire document | 1-9 |
| A | CN 112769454 A (ZTE CORP.) 07 May 2021 (2021-05-07) entire document | 1-9 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **09 August 2023** | **09 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/090346**

| Patent document cited in search report | | | Publication date (day/month/year) | Patent family member(s) | | | Publication date (day/month/year) |
|---|---|---|---|---|---|---|---|
| CN | 109792374 | A | 21 May 2019 | US | 2019238174 | A1 | 01 August 2019 |
| | | | | US | 10965337 | B2 | 30 March 2021 |
| | | | | WO | 2018059708 | A1 | 05 April 2018 |
| | | | | EP | 3520313 | A1 | 07 August 2019 |
| | | | | EP | 3520313 | B1 | 02 March 2022 |
| | | | | CN | 109792374 | B | 30 November 2021 |
| US | 2017111164 | A1 | 20 April 2017 | US | 10129010 | B2 | 13 November 2018 |
| | | | | WO | 2016005797 | A1 | 14 January 2016 |
| | | | | EP | 3167554 | A1 | 17 May 2017 |
| | | | | EP | 3167554 | B1 | 27 February 2019 |
| CN | 105991170 | A | 05 October 2016 | CN | 105991170 | B | 17 September 2019 |
| CN | 106559100 | A | 05 April 2017 | None | | | |
| CN | 112769454 | A | 07 May 2021 | CN | 112769454 | B | 26 May 2023 |

Form PCT/ISA/210 (patent family annex) (July 2022)

**REFERENCES CITED IN THE DESCRIPTION**

**Patent documents cited in the description**

- CN 202210468952